# EUROPEAN PATENT APPLICATION

(11) **EP 4 683 021 A1**
(43) Date of publication of application: **21.01.2026**
(21) Application number: 25165643.5
(22) Date of filing: 24.03.2025
(51) Int. Cl.: H01M 10/04, H01M 10/0585, H01M 10/0587

(54) **ELECTRODE ASSEMBLY AND SECONDARY BATTERY INCLUDING THE SAME**

(30) Priority: 15.07.2024 KR 20240092950
(71) Applicant: SAMSUNG SDI CO., LTD., Yongin-si, Gyeonggi-do 17084 (KR)
(72) Inventor: CHOI, Younggwang, 17084 Yongin-Si, Gyeonggi-do (KR)
(74) Representative: Gulde & Partner

(57) **Abstract**

A secondary battery includes: an electrode assembly including a through-hole in a thickness direction thereof, a case having an opening and accommodating the electrode assembly, a cap plate coupled to an end of the case having the opening of the case, and an electrode terminal electrically connected to an electrode tab of the electrode assembly and penetrating through the cap plate. The secondary battery further includes a fixing member in the through-hole to secure the electrode assembly in the thickness direction.

## Description

### BACKGROUND

### 1. Field

Aspects of embodiments of the present disclosure relate to an electrode assembly and a secondary battery including the electrode assembly.

### 2. Description of the Related Art

Unlike primary batteries that are not designed to be (re)charged, secondary (or rechargeable) batteries are batteries that are designed to be discharged and recharged. Low-capacity secondary batteries are utilized in portable, small electronic devices, such as smart phones, feature phones, notebook computers, digital cameras, and/or camcorders, while large-capacity secondary batteries are widely utilized as power sources for driving motors in hybrid vehicles and electric vehicles and for storing power (e.g., home and/or utility scale power storage). A secondary battery generally includes an electrode assembly composed of a positive electrode and a negative electrode, a case accommodating the electrode assembly, and electrode terminals connected to the electrode assembly.

The above information disclosed in this Background section is for enhancement of understanding of the background of the present disclosure, and therefore, it may contain information that does not constitute related (or prior) art.

### SUMMARY

Meanwhile, during the charging and discharging cycles, the secondary battery may experience swelling that is the phenomenon in which the electrode assembly expands due to various factors, such as gas generation within the electrode assembly, overcharging, and/or high-temperature environments. The swelling may lead to abnormalities in the secondary battery, such as performance degradation of the secondary battery, an internal short circuit of the secondary battery due to reduced adhesion between an electrode plate and a separator, and/or the like. Therefore, in order to prevent or reduce the occurrence of these abnormalities, it may be desirable to implement measures that may suppress the swelling.

Aspects of some embodiments of the present disclosure include a secondary battery and a method for manufacturing the secondary battery.

These and other aspects and features of the present disclosure will be described in or will be apparent from the following description of one or more embodiments of the present disclosure.

A secondary battery according to one or more embodiments of the present disclosure includes an electrode assembly including a through-hole in a thickness direction thereof, a case having an opening and accommodating the electrode assembly, a cap plate coupled to an end of the case having the opening of the case, an electrode terminal electrically connected to an electrode tab of the electrode assembly and penetrating through the cap plate, and a fixing member in the through-hole to secure the electrode assembly in the thickness direction.

According to one or more embodiments, the through-hole may be at a center of the electrode assembly.

According to one or more embodiments, an electrolyte may be impregnated into an interior of the electrode assembly through the through-hole.

According to one or more embodiments, the electrode assembly may include a first electrode plate, a second electrode plate, and a separator wound between the first electrode plate and the second electrode plate.

According to one or more embodiments, the first electrode plate may include a plurality of first through-holes, the second electrode plate may include a plurality of second through-holes, and the plurality of first through-holes of the first electrode plate and the plurality of second through-holes of the second electrode plate may be aligned with each other, if (e.g., when) the first electrode plate, the second electrode plate, and the separator are wound together.

According to one or more embodiments, the first electrode plate may include a plurality of first through-holes, the second electrode plate may include a plurality of second through-holes, the separator may include a plurality of third through-holes, and the plurality of first through-holes of the first electrode plate, the plurality of second through-holes of the second electrode plate, and the plurality of third through-holes of the separator may be aligned with each other, if (e.g., when) the first electrode plate, the second electrode plate, and the separator are wound together.

According to one or more embodiments, the electrode assembly may include a stack of a plurality of first electrode plates, a plurality of second electrode plates, and a separator that is bent in a zigzag shape and located between the plurality of first electrode plates and the plurality of second electrode plates, along the thickness direction.

According to one or more embodiments, each of the plurality of first electrode plates may include a first through-hole, each of the plurality of second electrode plates may include a second through-hole, and the first through-hole and the second through-hole may be aligned with each other, if (e.g., when) the plurality of first electrode plates, the plurality of second electrode plates, and the separator are stacked.

According to one or more embodiments, each of the plurality of first electrode plates may include a first through-hole, each of the plurality of second electrode plates may include a second through-hole, the separator may include a plurality of third through-holes, and the first through-hole , the second through-hole, and the plurality of third through-holes of the separator may be aligned with each other, if (e.g., when) the plurality of first electrode plates, the plurality of second electrode plates, and the separator are stacked.

According to one or more embodiments, the fixing member may include a first fixing member and a second fixing member. Further, the first fixing member and the second fixing member may be coupled to secure the electrode assembly in the thickness direction.

According to one or more embodiments, the first fixing member may include a first planar portion and a first protrusion protruding from the first planar portion, the second fixing member may include a second planar portion and a second protrusion protruding from the second planar portion, the second protrusion may include an insertion groove, and the first protrusion may be in the insertion groove of the second protrusion to couple the first fixing member with the second fixing member.

According to one or more embodiments, the first protrusion may include an embossed anchor, the insertion groove of the second protrusion may include a debossed anchor, and the first protrusion and the second protrusion may be coupled to each other in an anchor engagement manner.

According to one or more embodiments, the first protrusion may include screw threads, the insertion groove of the second protrusion may include screw grooves, and the first protrusion and the second protrusion may be coupled to each other in a screw coupling manner.

According to one or more embodiments, an area of the first planar portion and an area of the second planar portion may be larger than an area of the through-hole.

According to one or more embodiments, a length of the first protrusion may be greater than a length of the second protrusion.

According to one or more embodiments, the electrode assembly may include a first electrode plate, a second electrode plate, and a separator located between the first electrode plate and the second electrode plate, each of the first electrode plate and the second electrode plate may include a through-hole, and the through-hole is formed through the separator during a process of inserting the fixing member.

According to one or more embodiments, the fixing member may include an insulating material.

According to one or more embodiments, the fixing member may include at least one of acrylonitrile butadiene styrene (ABS), polypropylene (PP), polyethylene (PE), and/or polycarbonate (PC).

An electrode assembly according to one or more embodiments of the present disclosure includes a first electrode plate including a first through-hole, a second electrode plate including a second through-hole, a separator located between the first electrode plate and the second electrode plate, and a fixing member in the first through-hole and the second through-hole to secure the first electrode plate, the second electrode plate, and the separator in a thickness direction of the electrode assembly.

According to one or more embodiments, the fixing member may include a first fixing member and a second fixing member, and the first fixing member and the second fixing member may be coupled with each other to secure the first electrode plate, the second electrode plate, and the separator in the thickness direction.

According to one or more embodiments of the present disclosure, the through-hole is in the thickness direction of the electrode assembly, and the fixing member is in the through-hole to secure the electrode assembly in the thickness direction, which may suppress thickness deformation caused by the swelling of the electrode assembly.

According to one or more embodiments of the present disclosure, by applying pressure to the electrode assembly in the thickness direction, the adhesion (tightness) between the electrode plates and the separator may be improved, thereby suppressing the generation of gas or undesirable side reactions inside the electrode assembly.

According to one or more embodiments of the present disclosure, by providing the fixing member from the insulating material, even if the fixing member is inserted into the through-hole of the electrode assembly, a short circuit may not occur or may be prevented or reduced.

According to one or more embodiments of the present disclosure, the first electrode terminal and the second electrode terminal are provided at the opposite sides respectively (e.g. the opposite side-surfaces) of the secondary battery, and the vent is provided at the side where the electrode terminals are not provided. With such a configuration, the secondary battery module may be configured with improved insulation performance and space efficiency while allowing the gas discharged through the vent to be smoothly released through the side of the secondary battery where no electrode terminals are provided.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates a perspective view of a secondary battery according to some embodiments of the present disclosure.
FIG. 2 illustrates a perspective view of an electrode assembly according to some embodiments of the present disclosure.
FIG. 3 illustrates a perspective view of an electrode assembly coupled with a fixing member according to some embodiments of the present disclosure.
FIG. 4 illustrates an example of a coupling of a fixing member according to some embodiments of the present disclosure.
FIG. 5 illustrates examples of shapes of a first protrusion and a second protrusion according to some embodiments of the present disclosure.
FIG. 6 illustrates examples of a first electrode plate, a second electrode plate, and a separator according to some embodiments of the present disclosure.
FIG. 7 illustrates an example in which a fixing member is inserted into an electrode assembly according to some embodiments of the present disclosure.
FIG. 8 illustrates an example of a separator including a through-hole according to some embodiments of the present disclosure.
FIG. 9 illustrates an example of a winding-kind of electrode assembly according to some embodiments of the present disclosure.
FIG. 10 illustrates an example of a stack-kind of electrode assembly according to some embodiments of the present disclosure.

### DETAILED DESCRIPTION

Hereinafter, embodiments of the present disclosure will be described, in detail, with reference to the accompanying drawings. The terms or words utilized in this specification and claims should not be construed as being limited to the usual or dictionary meaning and should be interpreted as meaning and concept consistent with the technical idea of the present disclosure based on the principle that the inventor may be his/her own lexicographer to appropriately define the concept of the term to explain his/her disclosure in the best way.

The embodiments described in this specification and the configurations shown in the drawings are only some of the embodiments of the present disclosure and do not represent all of the technical ideas, aspects, and features of the present disclosure. Accordingly, it should be understood that there may be one or more equivalents and modifications that may replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the one or more elements, layers, etc. may be exaggerated for clarity of illustration. The same reference numerals designate the same elements. As utilized herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are utilized to designate a list of elements A, B and C, the phrase may refer to any and all suitable combinations or a subset of A, B and C, such as A, B, C, A and B, A and C, B and C, or A and B and C. As utilized herein, the terms "use," "using," and "used" may be considered synonymous with the terms "utilize," "utilizing," and "utilized," respectively. As utilized herein, the terms "substantially," "about," and similar terms are utilized as terms of approximation and not as terms of degree, and are intended to account for the inherent variations in measured or calculated values that would be recognized by those of ordinary skill in the art.

It will be understood that, although the terms first, second, third, etc. may be utilized herein to describe one or more elements, components, regions, layers, and/or sections, these elements, components, regions, layers, and/or sections should not be limited by these terms. These terms are utilized to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be utilized herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors utilized herein should be interpreted accordingly.

The terminology utilized herein is for the purpose of describing embodiments of the present disclosure and is not intended to be limiting of the present disclosure. As utilized herein, the singular forms "a" and "an" are intended to include the plural forms as well, unless the context clearly indicates otherwise. It will be further understood that the terms "have/has/having," "include/includes/including," and/or "comprise/comprises/comprising," when utilized in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In this specification, the singular forms "a," "an," and "the" are intended to include the plural forms as well unless the context clearly indicates the singular forms. Also, the plural forms are intended to include the singular forms as well, unless the context clearly indicates the plural forms. Furthermore, in this specification, when one part is referred to as "comprising" (or "including" or "having") other elements, the part may comprise (or include or have) only those elements or other elements as well as those elements unless specifically described otherwise.

In the present disclosure, the sizes and relative sizes of layers and regions shown in the drawings may be exaggerated for clarity of description. That is, the sizes shown in the drawings are only for convenience of understanding and are not limited thereto. Throughout the specification, like reference numerals will be given to like parts.

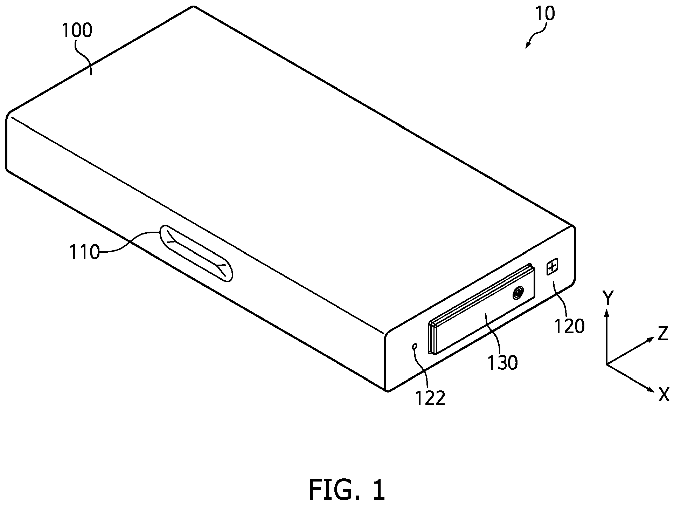

FIG. 1 illustrates a perspective view of a secondary battery according to some embodiments of the present disclosure. A secondary battery 10 may include an electrode assembly, a case 100 that accommodates the electrode assembly and has a first open side and a second open side (first and second side-surfaces) which are formed opposite to each other (e.g., the first open side and the second open side are located/provided at opposite sides respectively), a vent 110 formed at one side of the case 100, a first cap plate 120 that covers the first open side of the case 100, a first electrode terminal 130 electrically connected to the electrode assembly and penetrating through the first cap plate 120, a second cap plate that covers the second open side of the case 100, and a second electrode terminal electrically connected to the electrode assembly and penetrating through the second cap plate. The first open side of the case 100 and the second open side of the case 100 may be opposite to each other.

The case 100 may form the overall outer appearance of the secondary battery 10 and may include a conductive metal (e.g., the case 100 is made of a conductive metal), such as aluminum, aluminum alloy, and/or nickel-plated steel. In addition, the case 100 may provide a space in which the electrode assembly is accommodated.

The electrode assembly is accommodated in the case 100. An electrode assembly may include a stack of a first electrode plate, a separator, and/or a second electrode plate (e.g., the electrode assembly may be provided by (e.g., formed by) winding or stacking a stack of the first electrode plate, the separator, and the second electrode plate, which are formed as thin plates or films). If (e.g., when) the electrode assembly is a wound stack, a winding axis may be parallel to the longitudinal direction (e.g., the y direction) of the case 100. In some embodiments, the electrode assembly may be a stack kind of electrode assembly rather than a winding kind of electrode assembly, and the shape of the electrode assembly is not limited in the present disclosure. In addition, the electrode assembly may be a Z-stack electrode assembly (e.g., the electrode assembly may be folded/stacked into a zigzag pattern ("Z-shape"), in which a positive electrode plate and a negative electrode plate are inserted into both sides of a separator, which is then bent into a Z-stack. In addition, one or more electrode assemblies may be stacked, such that long sides of the electrode assemblies are adjacent to each other and accommodated in the case 100, and the number of electrode assemblies in the case is not limited in the present disclosure. The first electrode plate of the electrode assembly may act as a negative electrode, and the second electrode plate may act as a positive electrode. Of course, the reverse is also possible. Therefore, the first electrode plate of the electrode assembly may act as a positive electrode, and the second electrode plate may act as a negative electrode.

The first electrode plate may be provided by (e.g., formed by) applying a first electrode active material, such as graphite or carbon, to a first electrode current collector including a metal foil, such as copper, a copper alloy, nickel, and/or a nickel alloy (e.g., the first electrode current collector may be formed of the metal foil). The first electrode plate may include a first electrode tab (e.g., a first uncoated portion) that is a region to which the first electrode active material is not applied. The first electrode tab may act as a current flow path between the first electrode plate and the first current collector. In some embodiments, if (e.g., when) the first electrode plate is manufactured, the first electrode tab may be formed by being cut in advance to protrude to one side of the electrode assembly, or the first electrode tab may protrude to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum and/or an aluminum alloy. The second electrode plate may include a second electrode tab (e.g., a second uncoated portion) that is a region to which the second electrode active material is not applied. The second electrode tab may act as a current flow path between the second electrode plate and the second current collector. In some embodiments, the second electrode tab may be provided by (e.g., formed by) being cut in advance to protrude to the other side (e.g., the opposite side) of the electrode assembly if (e.g., when) the second electrode plate is manufactured, or the second electrode plate may protrude to the other side of the electrode assembly more than (e.g., farther than or beyond) the separator without being separately cut.

In some embodiments, the first electrode tab may be located on the right side of the electrode assembly, and the second electrode tab may be located on the left side of the electrode assembly. In some embodiments, the first electrode tab and the second electrode tab may be located on one side of the electrode assembly in the same direction. Here, for convenience of description, the left and right sides are defined according to the secondary battery 10 as oriented in FIG. 1, and the positions thereof may change if (e.g., when) the secondary battery 10 is rotated left and right or up and down.

The first electrode tab of the first electrode plate and the second electrode tab of the second electrode plate may be respectively positioned at both ends (e.g., the first electrode tab and the second electrode tab are located at opposite ends respectively) of the electrode assembly. In some embodiments, the electrode assembly may be accommodated in the case along with an electrolyte. In addition, in the electrode assembly, the first current collector and the second current collector may be welded and connected to the first electrode tab of the first electrode plate and the second electrode tab of the second electrode plate exposed on both sides, respectively, to then be positioned thereat, respectively.

As shown in FIG. 1, the vent 110 may be formed at (e.g., provided at) one side of the case 100. For example, one side of the case 100 at which the vent 110 is formed/provided may correspond to a bottom surface of the case 100. Here, the bottom surface refers to the side facing downward if (e.g., when) the secondary battery 10 is finally installed. As shown in FIG. 1, the vent 110 may be formed at (e.g., provided at) the center of one side of the case 100.

In one or more embodiments, the case 100 may accommodate the electrode assembly 200 along with an electrolyte therein. In more detail, the electrode assembly 200 may be received into the case 100 through the first open side of the case 100 or the second open side of the case that is opposite the first open side. Here, the open side may refer to an opening of the case 100. The first cap plate 120 may cover the first open side of the case 100, and the second cap plate may cover the second open side of the case 100. Further, an electrolyte injection hole 122 may be formed at (e.g., provided at) the first cap plate 120, and the electrolyte may be injected into the case 100 through the electrolyte injection hole 122. FIG. 1 shows that the electrolyte injection hole 122 is formed at (e.g., provided at) the first cap plate 120, but the scope of the present disclosure is not limited thereto. For example, the electrolyte injection hole may be formed at (e.g., provided at) the second cap plate, and the electrolyte may be injected into the case 100 through the electrolyte injection hole formed at (e.g., provided at) the second cap plate. After the injection of the electrolyte is completed, the electrolyte injection hole 122 may be sealed utilizing a sealing member, such as a stopper and/or the like.

A first electrode terminal 130 may be arranged on the first cap plate 120 and extend further through the first cap plate 120 to be electrically connected to the first electrode tab of the electrode assembly 200. Similarly, although not be provided in FIG. 1, a second electrode terminal may be arranged on the second cap plate and extend further through the second cap plate to be electrically connected to the second electrode tab of the electrode assembly 200. Here, the first electrode terminal 130 may be a positive electrode terminal, and the second electrode terminal may be a negative electrode terminal. Accordingly, a positive electrode terminal indication (+) may be formed on (e.g., provided on) the first cap plate 120 by engraving and/or the like. Similarly, a negative electrode terminal indication (-) may be formed on (e.g., provided on) the second cap plate by engraving and/or the like. On the other hand, the first electrode terminal 130 may be the negative electrode terminal, and the second electrode terminal may be the positive electrode terminal. In this case, the negative electrode terminal indication (-) may be formed on (e.g., provided on) the first cap plate 120 by engraving and/or the like, and the positive electrode terminal indication (+) may be formed on (e.g., provided on) the second cap plate by engraving or the like.

In one or more embodiments, a length of a long side of the first electrode terminal 130 and a length of a long side of the second electrode terminal may be equal to or greater than half of a length of a long side of the first cap plate 120 and half of a length of a long side of the second cap plate, respectively. Additionally or alternatively, a length of a short side of the first electrode terminal 130 and a length of a short side of the second electrode terminal may be equal to or greater than half of a length of a short side of the first cap plate 120 and half of a length of a short side of the second cap plate, respectively. This allows for improved heat dissipation due to the increased volume of the electrode terminals, as well as reduced heat generation due to the increased welding area of the busbar of the secondary battery module.

In one or more embodiments, the vent 110 may be formed at (e.g., provided at) one side of the case 100 (e.g., the bottom surface of the case). The vent 110 may be configured to be opened, in response to a case where an internal pressure of the secondary battery 10 exceeds a threshold pressure (e.g., a predetermined pressure that is utilized as a threshold to determine whether to open the vent 110 in response to an internal pressure of the secondary battery 10 exceeding or being below the predetermined pressure). In this case, the threshold pressure may be set differently depending on the applications, materials, purpose, and/or the like of the secondary battery 10. For example, a relatively high threshold pressure may be set for a secondary battery 10, in which the internal pressure of the case is maintained at a higher pressure on average compared to other applications due to short charge-discharge cycles during utilization. In some embodiments, a relatively high threshold pressure may be set for a secondary battery 10 that is manufactured with a material and/or design that has relatively high heat and/or pressure resistance. In contrast, a relatively low threshold pressure may be set for a secondary battery 10 that is manufactured with a material and/or design that has relatively low heat and/or pressure resistance.

Additionally or alternatively, the vent 110 may be configured to be opened, in response to a case where an internal temperature exceeds a threshold temperature (e.g., a predetermined temperature that is utilized as a threshold to determine whether to open the vent 110 in response to an internal temperature of the secondary battery 10 exceeding or being below the predetermined temperature). With such a configuration, the vent 110 may serve to prevent or reduce the explosion of the secondary battery 10 and/or prevent or reduce a chain exothermic reaction of secondary batteries arranged adjacent to the secondary battery 10.

FIG. 1 shows a single vent 110 formed at (e.g., provided at) the center of one side of the case 100. However, the number of the vents is not limited thereto, and any number of vents 110 may be formed at (e.g., provided at) arbitrary positions at one side of the case 100. For example, two or more vents 110 may be formed at (e.g., provided at) one side of the case 100.

As described above, the first electrode terminal 130 and the second electrode terminal 130 are provided at the opposite sides respectively (e.g. the opposite side-surfaces (front surface and back surface, top surface and bottom surface, and/or the like)) of the secondary battery 10, and the vent 110 is provided at the side where the electrode terminals are not provided (e.g., the bottom surface of the secondary battery 10). With such a configuration, the secondary battery module may be configured with improved insulation performance and space efficiency, while allowing the gas discharged through the vent 110 to be smoothly released through the bottom surface of the secondary battery 10 where no electrode terminals are provided.

In FIG. 1, it is described that the cap plate and the electrode terminals are on the opposite sides, e.g., the opposite side-surfaces of the secondary battery 10 according to some embodiments of the present disclosure. However, the configuration of the secondary battery 10 is not limited thereto. For example, the case 100 may include an opening in an upward direction, and the electrode assembly 200 may be received inside the case 100 through the upward-facing opening. Additionally, the cap plate may be coupled to an end of the case having the opening of the case 100. In this case, electrode terminals in electrical connection with the electrode assembly 200 may pass through the cap plate.

The secondary battery 10 according to one or more embodiments of the present disclosure is described as a prismatic lithium-ion secondary battery by way of example. However, the present disclosure is not limited thereto, and the present disclosure may be applied to various kinds of secondary batteries, such as lithium polymer secondary batteries or cylindrical secondary batteries.

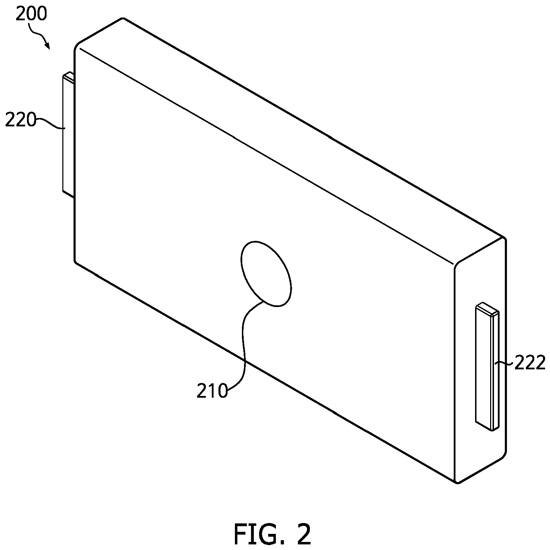

FIG. 2 illustrates a perspective view of an electrode assembly 200 according to some embodiments of the present disclosure. As shown in FIG. 2, an electrode assembly 200 may include a through-hole 210 formed in (e.g., provided in) a thickness direction thereof. Additionally, the electrode assembly 200 may be provided by (e.g., formed by) winding or stacking a first electrode plate, a second electrode plate, and a separator. The electrode assembly 200 may include a first electrode tab 220 electrically connected to the first electrode plate and arranged to extend in a longitudinal direction of the electrode assembly 200 from the first electrode plate, and a second electrode tab 222 electrically connected to the second electrode plate and arranged to extend in the longitudinal direction of the electrode assembly 200 from the second electrode plate. In FIG. 1, the directions in which the first electrode tab 220 and the second electrode tab 222 extend are illustrated in opposite directions, but are not limited thereto. Thus, the first electrode tab 220 and the second electrode tab 222 may extend in the same direction from the first electrode plate and the second electrode plate, respectively. In this case, the first electrode tab 220 and the second electrode tab 222 may be arranged so as not to overlap each other to prevent or reduce a short circuit.

In one or more embodiments, the electrolyte injected into the interior of the case through the electrolyte injection hole may be impregnated into the interior of the electrode assembly 200 through the through-hole 210 of the electrode assembly 200.

In one or more embodiments, the electrode assembly 200 may be a winding-kind of electrode assembly. For example, the electrode assembly 200 may be provided (e.g., formed) as a wound structure by winding the first electrode plate and the second electrode plate with the separator, which serves as an insulator, wound between (e.g., interposed/located between) the first electrode plate and the second electrode plate. In this case, a plurality of first through-holes may be formed through the first electrode plate, and a plurality of second through-holes may be formed through the second electrode plate. The plurality of first through-holes of the first electrode plate and the plurality of second through-holes of the second electrode plate may be positioned in alignment with each other (e.g., the plurality of first through-holes may be aligned with the plurality of second through-holes), if (e.g., when) the first electrode plate, the second electrode plate, and the separator are wound together. Additionally or alternatively, a plurality of first through-holes may be formed through the first electrode plate, a plurality of second through-holes may be formed through the second electrode plate, and a plurality of third through-holes may be formed through the separator. In this case, the plurality of first through-holes of the first electrode plate, the plurality of second through-holes of the second electrode plate, and the plurality of third through-holes of the separator may be positioned in alignment with each other (e.g., the plurality of first through-holes may be aligned with the plurality of second through-holes and the plurality of third through-holes), if (e.g., when) the first electrode plate, the second electrode plate, and the separator are wound together.

In one or more embodiments, the electrode assembly 200 may be a stack-kind of electrode assembly. For example, the electrode assembly 200 may be formed (e.g., provided) as a stacked structure, in which a plurality of first electrode plates, a plurality of second electrode plates, and a separator, which is folded in a zigzag pattern and between (e.g., interposed/located between) the plurality of first electrode plates and the plurality of second electrode plates, are stacked in a thickness direction. In this case, a first through-hole may be formed through each of the plurality of first electrode plates, and a second through-hole may be formed through each of the plurality of second electrode plates. Further, the first through-hole of each of the plurality of first electrode plates and the second through-hole of each of the plurality of second electrode plates may be positioned in alignment with each other (e.g., a plurality of first through-holes may be aligned with a plurality of second through-holes), if (e.g., when) the plurality of first electrode plates, the plurality of second electrode plates, and the separator are stacked together. Additionally or alternatively, a first through-hole may be formed through each of the plurality of first electrode plates, a second through-hole may be formed through each of the plurality of second electrode plates, and a plurality of third through-holes may be formed through the separator. Further, the first through-hole of each of the plurality of first electrode plates, the second through-hole of each of the plurality of second electrode plates, and the plurality of third through-holes of the separator may be positioned in alignment with each other (e.g., the first through-hole may be aligned with the second through-hole and the third through-holes), if (e.g., when) the plurality of first electrode plates, the plurality of second electrode plates, and the separator are stacked together. In one or more embodiments, the through-hole 210 formed (e.g., provided) in the thickness direction of the electrode assembly 200 may be formed at (e.g., provided at) the center of the electrode assembly 200.

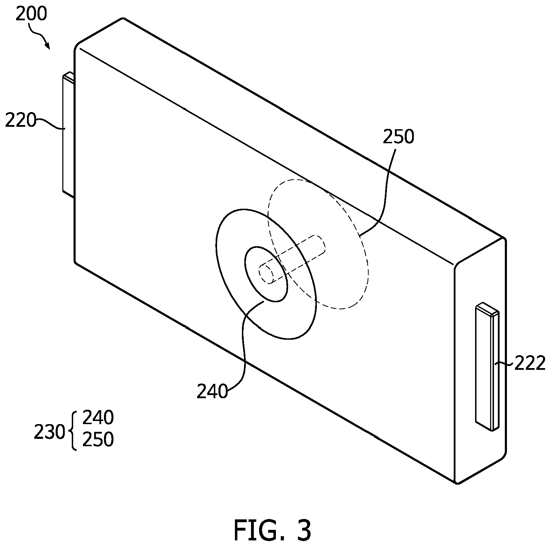

FIG. 3 illustrates a perspective view of an electrode assembly 200 coupled with a fixing member according to some embodiments of the present disclosure. As shown in FIG. 3, a fixing member 230 is inserted into the through-hole of the electrode assembly 200, thereby securing the electrode assembly 200 in the thickness direction.

In one or more embodiments, the fixing member 230 may include a first fixing member 240 and a second fixing member 250. The first fixing member 240 and the second fixing member 250 may be inserted into the through-hole of the electrode assembly 200. Further, the first fixing member 240 and the second fixing member 250 may be coupled to each other. By coupling the first fixing member 240 and the second fixing member 250, the electrode assembly 200 may be secured in the thickness direction.

In FIGS. 2 and 3, the through-hole 210 of the electrode assembly 200 and the corresponding fixing member 230 are depicted as singular elements. However, the scope of the present disclosure is not limited thereto. For example, the electrode assembly 200 may include a plurality of through-holes formed in (e.g., provided in) the thickness direction, and correspondingly, a plurality of fixing members may be inserted into the plurality of through-holes. This configuration allows the electrode assembly 200 to be secured in the thickness direction.

As described above, the through-hole is formed in (e.g., provided in) the thickness direction of the electrode assembly 200, and the fixing member 230 is inserted into the through-hole to secure the electrode assembly 200 in the thickness direction, which may suppress thickness deformation caused by the swelling of the electrode assembly 200. Furthermore, by applying pressure to the electrode assembly 200 in the thickness direction, the adhesion (tightness) between the electrode plates and the separator may be improved, thereby suppressing the generation of gas or undesirable side reactions inside the electrode assembly 200.

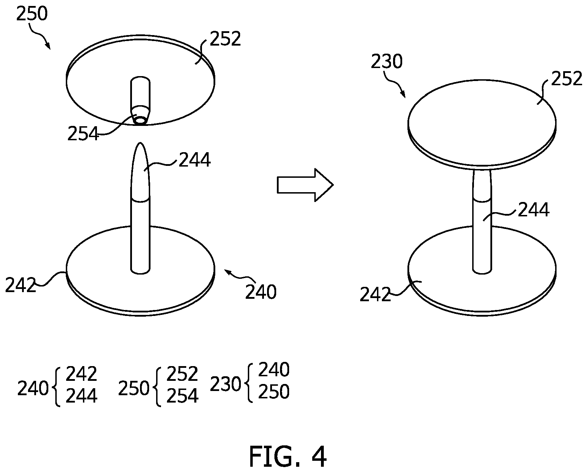

FIG. 4 illustrates an example of the coupling of the fixing member according to some embodiments of the present disclosure. As shown in FIG. 4, the fixing member 230 may include the first fixing member 240 and the second fixing member 250.

In one or more embodiments, the first fixing member 240 may include a first planar portion 242 and a first protrusion 244 protruding from the first planar portion 242, and the second fixing member 250 may include a second planar portion 252 and a second protrusion 254 protruding from the second planar portion 252. For example, the first protrusion 244 may be formed to protrude from the first planar portion 242, and the second protrusion 254 may be formed to protrude from the second planar portion 252.

In FIG. 4, each of the first planar portion 242 and the second planar portion 252 may have a plate shape having a circular cross-section, but is not limited thereto. For example, each of the first planar portion 242 and the second planar portion 252 may be formed (e.g., provided) as a plate shape having a cross-section, such as a circular cross-section, an oval cross-section, a triangular cross-section, a rectangular cross-section, and/or a polygonal cross-section. Further, the shape of each of the first planar portion 242 and the second planar portion 252 in FIG. 4 is illustrated as a flat plate, but is not limited thereto. For example, each of the first planar portion 242 and the second planar portion 252 may be formed (e.g., provided) in a shape corresponding to the surface of the electrode assembly 200 to facilitate securing the electrode assembly 200 in the thickness direction.

In one or more embodiments, the area of the first planar portion 242 and the area of the second planar portion 252 may be larger than the area of the through-hole respectively. Accordingly, the first planar portion 242 and the second planar portion 252 may secure the electrode assembly 200 in the thickness direction in a region adjacent to the through-hole.

In one or more embodiments, the length of the first protrusion 244 may be greater than the length of the second protrusion 254.

In one or more embodiments, the second protrusion 254 of the second fixing member 250 may include an insertion groove. As shown in FIG. 4, the first protrusion 244 may be inserted into the insertion groove of the second protrusion 254, thereby allowing the first fixing member 240 and the second fixing member 250 to be coupled.

In one or more embodiments, the fixing member 230 may include (e.g., be made of/be formed of) an insulating material. For example, the fixing member 230 may include at least one of acrylonitrile butadiene styrene (ABS), polypropylene (PP), polyethylene (PE), and/or polycarbonate (PC). By forming (e.g., providing) the fixing member 230 from the insulating material, even if the fixing member 230 is inserted into the through-hole of the electrode assembly 200, a short circuit may not occur or may be prevented or reduced.

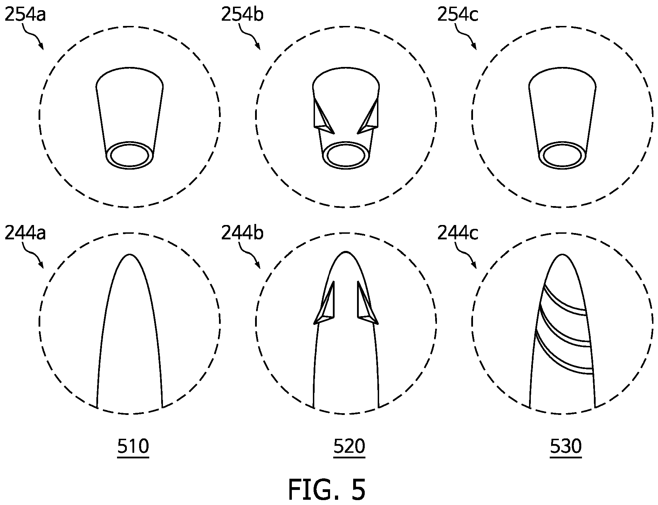

FIG. 5 illustrates examples of the shapes of the first protrusion 244 and the second protrusion 254 according to some embodiments of the present disclosure. As shown in FIG. 5, each of the first protrusion 244 and the second protrusion 254 may be an insertion-kind of protrusion 510, an anchor-kind of protrusion 520, or a screw-kind of protrusion 530. However, the first protrusion 244 and the second protrusion 254 shown in FIG. 5 are shown as an example, and the shapes of the first protrusion 244 and the second protrusion 254 are not limited thereto.

First, FIG. 5 shows a first protrusion 244a and a second protrusion 254a, in which the first protrusion 244a and the second protrusion 254a are the insertion-kind of protrusion 510. The first protrusion 244a may be provided in a rivet-like shape (e.g., the first protrusion 244a may be formed in a rivet-like shape, such as a shape of a short metal pin), and the second protrusion 254a may include an insertion groove into which the first protrusion 244a may be inserted. In this case, the first protrusion 244a may be inserted into the insertion groove of the second protrusion 254a in an interference fit manner. By inserting the first protrusion 244a into the insertion groove of the second protrusion 254a, the first fixing member 240 and the second fixing member 250 may be coupled.

In some embodiments, FIG. 5 shows a first protrusion 244b and a second protrusion 254b, in which the first protrusion 244b and the second protrusion 254b are the anchor-kind of protrusion 520. As shown in FIG. 5, the first protrusion 244b may include an embossed anchor (e.g., the first protrusion 244b may be formed with the embossed anchor). The insertion groove of the second protrusion 254b may include a debossed anchor to correspond to the embossed anchor of the first protrusion 244b (e.g., the insertion groove of the second protrusion 254b may be formed with the debossed anchor). In this case, the first protrusion 244b and the second protrusion 254b may be coupled in an anchor engagement manner. In more detail, the first protrusion 244b may be inserted into the insertion groove of the second protrusion 254b in an interference fit manner, and then the embossed anchor of the first protrusion 244b may engage with the debossed anchor formed in (e.g., provided in) the insertion groove of the second protrusion 254b, thereby coupling the first protrusion 244b with the second protrusion 254b. The coupling method utilizing the anchor-kind of protrusions 520 may provide greater fastening strength compared to the coupling method utilizing the insertion-kind of protrusions 510.

In some embodiments, FIG. 5 shows a first protrusion 244c and a second protrusion 254c, in which the first protrusion 244c and the second protrusion 254c are the screw-kind of protrusion 530. As shown in FIG. 5, the first protrusion 244c may include screw threads (e.g., the first protrusion 244c may be formed with the screw threads). Although not provided in FIG. 5, the insertion groove of the second protrusion 254c may include screw grooves (e.g., the insertion groove of the second protrusion 254c may be formed with the screw grooves). In this case, the first protrusion 244c and the second protrusion 254c may be coupled in a screw coupling manner. In more detail, if (e.g., when) the first protrusion 244c is inserted into the insertion groove of the second protrusion 254c, the screw threads of the first protrusion 244c engage with the screw grooves of the second protrusion 254c. The coupling method utilizing the screw-kind of protrusions 530 may provide greater fastening strength compared to the coupling method utilizing the insertion-kind of protrusions 510.

With such a configuration, various kinds of the coupling methods in which the first fixing member and the second fixing member are coupled may be selectively applied based on the swelling characteristics of the electrode assembly 200. For example, in the case of an electrode assembly 200 having strong swelling characteristics that significantly expands in the thickness direction, the coupling method with the anchor-kind of protrusions 520 and/or the screw-kind of protrusions 530, which provides relatively greater fastening strength, may be employed. On the other hand, in the case of an electrode assembly 200 having weak swelling characteristics that insignificantly expands in the thickness direction, the coupling method with the insertion-kind of protrusions 510 may be employed.

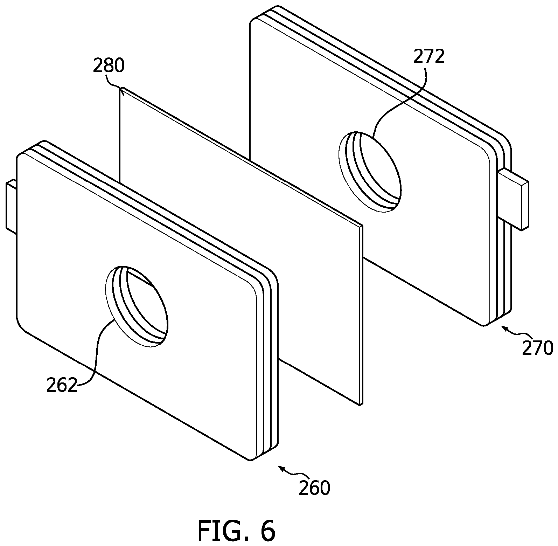

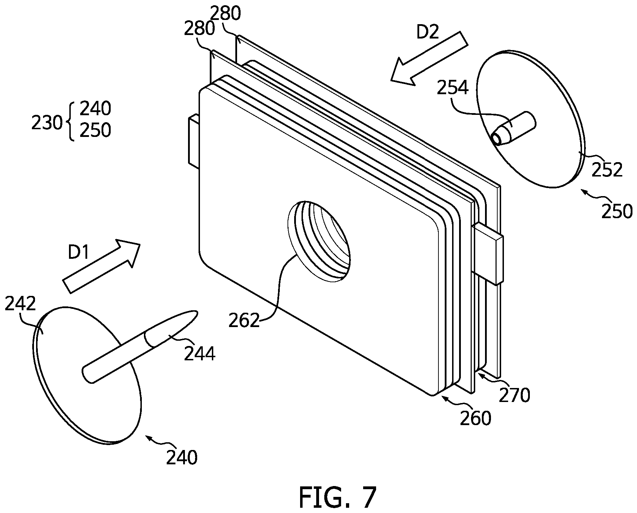

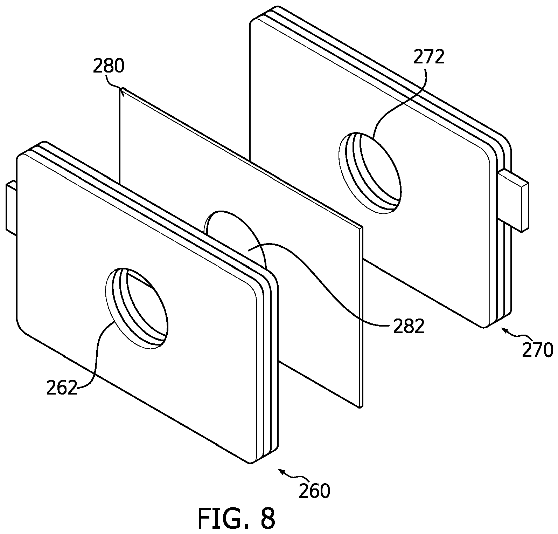

FIG. 6 illustrates examples of a first electrode plate, a second electrode plate, and a separator according to some embodiments of the present disclosure. As shown in FIG. 6, a separator 280 may be between (e.g., interposed/located between) a first electrode plate 260 and a second electrode plate 270. The first electrode plate 260, the second electrode plate 270, and separator 280 illustrated in FIG. 6 represent an example of a structure included in the electrode assembly 200. Therefore, the following description of FIG. 6 may be applied without limitation to the shape of the electrode assembly 200. This also applies to FIGS. 7 and 8.

In one or more embodiments, the first electrode plate 260 may be formed by (e.g., provided by) applying a first active material, such as a transition metal oxide, onto a first substrate made of a metal foil, such as aluminum and/or an aluminum alloy. The first electrode plate 260 may include a first uncoated portion, which is a region to which the first active material is not applied. The first electrode tab may serve as a path for current flow between the first electrode plate and the first electrode terminal. In some embodiments, the first electrode tab may be formed by (e.g., provided by) previously cutting the first electrode plate, so that the first electrode tab protrude from a first side in a case where the first electrode plate is manufactured, and may protrude further from the first side than separator without additional cutting.

In one or more embodiments, the first electrode plate 260 may be formed by (e.g., providing by) applying the first active material onto the first substrate after a first through-hole 262 is formed through the first substrate. In some embodiments, the first electrode plate 260 may be formed by (e.g., provided by) applying the first active material onto the first substrate before the first through-hole 262 is formed through the substrate. In this case, the first active material applied at a location corresponding to the first through-hole 262 may be removed during the process of providing the first through-hole 262.

In one or more embodiments, the second electrode plate is formed by (e.g., provided by) applying a second active material, such as graphite and/or carbon, onto a second substrate made of a metal foil, such as copper, a copper alloy, nickel, and/or a nickel alloy. The second electrode plate may include a second uncoated portion, which is a region to which the second active material is not applied. The second electrode tab may serve as a path for current flow between the second electrode plate and the second electrode terminal. In some embodiments, the second electrode tab may be formed by (e.g., provided by) previously cutting the second electrode plate, so that the second electrode tab protrudes from a second side in a case where the second electrode plate is manufactured, and may protrude further from the second side than separator without additional cutting.

In one or more embodiments, the second electrode plate 270 may be formed by (e.g., provided by) applying the second active material onto the second substrate after a second through-hole 272 is formed through the second substrate. In some embodiments, the second electrode plate 270 may be formed by (e.g., provided by) applying the second active material onto the second substrate before the second through-hole 272 is formed through the second substrate. In this case, the second active material applied at a location corresponding to the second through-hole 272 may be removed during the process of forming (e.g., providing) the second through-hole 272.

In one or more embodiments, the first electrode plate 260 may include the first through-hole 262 formed therethrough, and the second electrode plate 270 may include the second through-hole 272 formed therethrough (e.g., the second through-hole is provided through the second electrode plate 270). The first through-hole 262 formed through the first electrode plate 260 and the second through-hole 272 formed through the second electrode plate 270 may be positioned in alignment with each other (e.g., the first through-hole 262 is aligned with the second through-hole 272) within the electrode assembly 200. For example, in a case where the electrode assembly 200 is formed (e.g., provided) as a wound structure by winding the first electrode plate 260 and the second electrode plate 270 with the separator 280 wound between (e.g., interposed/located between) the first electrode plate 260 and the second electrode plate 270, the first through-hole 262 formed through the first electrode plate 260 and the second through-hole 272 formed through the second electrode plate 270 may be positioned in alignment with each other (e.g., the first through-hole 262 is aligned with the second through-hole 272), if (e.g., when) the first electrode plate 260, the second electrode plate 270, and the separator 280 are wound together.

FIG. 7 illustrates an example in which a fixing member is inserted into an electrode assembly 200, according to some embodiments of the present disclosure. FIG. 8 illustrates an example of a separator including a through-hole according to some embodiments of the present disclosure. As shown in FIGS. 7 and 8, the electrode assembly 200 may be secured by coupling the first fixing member 240 and the second fixing member 250 in the thickness direction of the electrode assembly 200. While FIG. 7 illustrates a structure including the first electrode plate 260, the second electrode plate 270, and the separator 280 between (e.g., interposed/located between) the first electrode plate 260 and the second electrode plate 270, the following description is also applicable to an electrode assembly 200 formed by (e.g., provided by) stacking and/or winding the first electrode plate, the second electrode plate, and the separator.

In one or more embodiments, the first fixing member 240 and the second fixing member 250 may be inserted into the through-hole of the electrode assembly 200 from the opposite sides of the electrode assembly 200 to secure the electrode assembly 200 in the thickness direction. For example, the first fixing member 240 may be inserted into the through-hole of the electrode assembly 200 in a direction D1, while the second fixing member 250 may be inserted into the through-hole of the electrode assembly 200 in a direction D2. The first fixing member 240 and the second fixing member 250 may be coupled together to secure the electrode assembly 200 in the thickness direction.

In one or more embodiments, each of the first electrode plate 260 and the second electrode plate 270 may be formed with (e.g., provided with) the through-hole, while the through-hole of the separator 280 may be formed (e.g., provided) during the insertion of the fixing member 230. As shown in FIG. 7, prior to the insertion of the fixing member 230, no through-hole may be formed in (e.g., provided in) the separator 280. During the insertion of the fixing member 230, the first protrusion 244 and/or the second protrusion 254 may penetrate through the separator 280, thereby forming (e.g., providing) the through-hole in the separator 280. In this case, a tip of the first protrusion 244 may include a sharp edge to sufficiently penetrate through the separator 280 (e.g., the tip of the first protrusion 244 may be formed with a sharp edge).

In one or more embodiments, as shown in FIG. 8, the through-hole may be formed (e.g., provided) in advance in each of the first electrode plate 260, the second electrode plate 270, and the separator 280. In this case, the fixing member 230 may be inserted into the first through-hole 262 of the first electrode plate 260, the second through-hole 272 of the second electrode plate 270, and the third through-hole 282 of the separator 280, which are formed (e.g., provided) in advance, to thereby secure the electrode assembly 200 in the thickness direction.

In one or more embodiments, in a case where the through-hole is formed (e.g., provided) in advance in each of the first electrode plate 260, the second electrode plate 270, and the separator 280, the first through-hole 262 formed through the first electrode plate 260, the second through-hole 272 formed through the second electrode plate 270, and the third through-hole 282 formed through the separator 280 may be positioned in alignment with each other (e.g., the first through-hole 262 is aligned with the second through-hole 272 and the third through-hole 282), if (e.g., when) the first electrode plate 260, the second electrode plate 270, and the separator 280 are wound and/or stacked to form the electrode assembly 200.

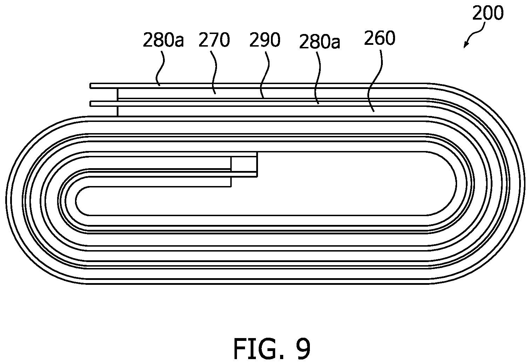

FIG. 9 illustrates an example of a winding-kind of electrode assembly 200 according to some embodiments of the present disclosure. As shown in FIG. 9, the first electrode plate 260, the second electrode plate 270, and separators 280a and 280b may be wound together to provide the electrode assembly 200.

Referring to Fig. 9, the winding-kind of electrode assembly 200 may be formed by (e.g., provided by) winding a structure in which the first electrode plate 260, the first separator 280a, a lithium-ion conductor layer 290, the second electrode plate 270, and the second separator 280b are sequentially stacked. Here, in order to prevent or reduce contact between the first electrode plate 260 and the second electrode plate 270, the first separator 280a and the second separator 280b may be formed to (e.g., provided to) have lengths that are greater than lengths of the first electrode plate 260 and the second electrode plate 270.

In one or more embodiments, the first electrode plate 260 may include a plurality of first through-holes, and the second electrode plate 270 may include a plurality of second through-holes. The plurality of first through-holes of the first electrode plate 260 and the plurality of second through-holes of the second electrode plate may be positioned in alignment with each other (e.g., the plurality of first through-holes is aligned with the plurality of second through-holes), if (e.g., when) the first electrode plate 260, the second electrode plate 270, and the separator 280 are wound together.

In one or more embodiments, the first electrode plate 260 may include a plurality of first through-holes, the second electrode plate 270 may include a plurality of second through-holes, and the separator 280 may include a plurality of third through-holes. In this case, the plurality of first through-holes of the first electrode plate 260, the plurality of second through-holes of the second electrode plate 270, and the plurality of third through-holes of the separator may be positioned in alignment with each other (e.g., the plurality of first through-holes is aligned with the plurality of second through-holes and the plurality of third through-holes), if (e.g., when) the first electrode plate 260, the second electrode plate 270, and the separator 280 are wound together.

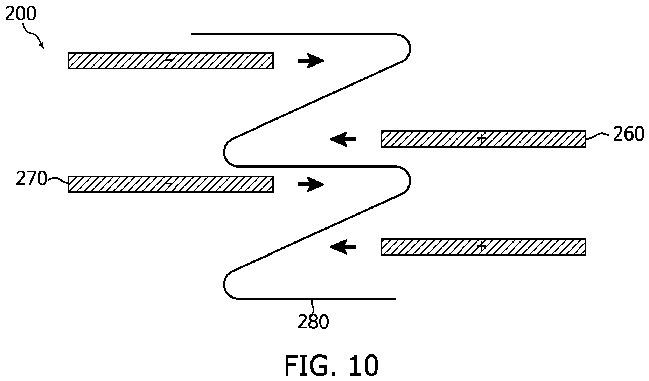

FIG. 10 illustrates an example of a stack-kind of electrode assembly 200 according to some embodiments of the present disclosure. As shown in FIG. 10, the electrode assembly 200 may include a plurality of first electrode plates 260, a plurality of second electrode plates 270, and a separator 280 between (e.g., interposed/located between) the plurality of first electrode plates 260 and the plurality of second electrode plates 270. The separator 280 may be bent in a zigzag shape.

In one or more embodiments, the electrode assembly 200 may be formed by (e.g., provided by) stacking the plurality of first electrode plates 260, the plurality of second electrode plates 270, and the separator 280, which is bent in a zigzag shape and located between (e.g., interposed between) the plurality of first electrode plates 260 and the plurality of second electrode plates 270, along a thickness direction. As shown in FIG. 10, the separator 280 may be bent in a zigzag manner, and the plurality of first electrode plates 260 and the plurality of second electrode plates 270 may be inserted and stacked alternately between the bent portions of the separator 280. The plurality of first electrode plates 260 and the plurality of second electrode plates 270 may be inserted in the direction of the arrows shown in FIG. 10.

In one or more embodiments, a first through-hole may be formed through each of the plurality of first electrode plates 260, and a second through-hole may be formed through each of the plurality of second electrode plates 270. Further, the first through-hole of each of the plurality of first electrode plates 260 and the second through-hole of each of the plurality of second electrode plates 270 may be positioned in alignment with each other (e.g., the first through-hole is aligned with the second through-hole), if (e.g., when) the plurality of first electrode plates 260, the plurality of second electrode plates 270, and the separator 280 are stacked together. In this case, through-holes may be formed through the separator 280 during the process of inserting the fixing member.

In one or more embodiments, a first through-hole may be formed through each of the plurality of first electrode plates 260, a second through-hole may be formed through each of the plurality of second electrode plates 270, and a plurality of third through-holes may be formed through the separator 280. Further, the first through-hole of each of the plurality of first electrode plates 260, the second through-hole of each of the plurality of second electrode plates 270, and the plurality of third through-holes of the separator 280 may be positioned in alignment with each other (e.g., the first through-hole is aligned with the second through-hole and the plurality of third through-holes), if (e.g., when) the plurality of first electrode plates 260, the plurality of second electrode plates 270, and the separator 280 are stacked together.

The example embodiments of the present disclosure described above are disclosed for purposes of illustration, and it will be understood by those skilled in the art that one or more modifications, changes, and additions are made within the scope of the present disclosure, and such modifications, changes, and additions should be regarded as falling within the scope of the claims.

One or more replacements, modifications, and changes may be made without departing from the scope of the present disclosure by those skilled in the art. Therefore, the present disclosure is not limited by the above-described embodiment and the accompanying drawings.

Although the present disclosure has been described above with respect to embodiments thereof, the present disclosure is not limited thereto. One or more modifications and variations may be made thereto by those skilled in the art within the scope of the present disclosure and the equivalent scope of the appended claims.

### DESCRIPTION OF SOME REFERENCE SYMBOLS

10: secondary battery
100: case
110: vent
120: cap plate
122: electrolyte injection hole
130: electrode terminal

## Claims

1. A secondary battery (10) comprising:
an electrode assembly (200) comprising a through-hole (210) in a thickness direction thereof;
a case (100) having an opening and accommodating the electrode assembly (200);
a cap plate (120) coupled to an end of the case (100) having the opening of the case (100);
an electrode terminal (130) electrically connected to an electrode tab (220, 222) of the electrode assembly (200) and penetrating through the cap plate (120); and
a fixing member (230) in the through-hole (210) to secure the electrode assembly (200) in the thickness direction.

2. The secondary battery (10) as claimed in claim 1, wherein the through-hole (210) is at a center of the electrode assembly (200).

3. The secondary battery (10) as claimed in claim 1 or 2, wherein an electrolyte is impregnated into an interior of the electrode assembly (200) through the through-hole (210).

4. The secondary battery (10) as claimed in claims 1 to 3, wherein the electrode assembly (200) comprises a first electrode plate (260), a second electrode plate (270), and a separator (280) wound between the first electrode plate (260) and the second electrode plate (270).

5. The secondary battery (10) as claimed in claim 4, wherein the first electrode plate (260) comprises a plurality of first through-holes (262),
the second electrode plate (270) comprises a plurality of second through-holes (272), and
the plurality of first through-holes (262) of the first electrode plate (260) and the plurality of second through-holes (272) of the second electrode plate (270) are aligned with each other when the first electrode plate (260), the second electrode plate (270), and the separator (280) are wound together.

6. The secondary battery (10) as claimed in claim 4, wherein the first electrode plate (260) comprises a plurality of first through-holes (262),
the second electrode plate (270) comprises a plurality of second through-holes (272),
the separator (280) comprises a plurality of third through-holes (282), and
the plurality of first through-holes (262) of the first electrode plate (260), the plurality of second through-holes (272) of the second electrode plate (270), and the plurality of third through-holes (282) of the separator (280) are aligned with each other when the first electrode plate (260), the second electrode plate (270), and the separator (280) are wound together.

7. The secondary battery (10) as claimed in claims 1 to 6, wherein the electrode assembly (200) comprises a stack of a plurality of first electrode plates (260), a plurality of second electrode plates (270), and a separator (280) that is bent in a zigzag shape and located between the plurality of first electrode plates (260) and the plurality of second electrode plates (270), along the thickness direction.

8. The secondary battery (10) as claimed in claim 7, wherein each of the plurality of first electrode plates (260) comprises a first through-hole (262),
each of the plurality of second electrode plates (270) comprises a second through-hole (272), and
the first through-hole (262) and the second through-hole (272) are aligned with each other when the plurality of first electrode plates (260), the plurality of second electrode plates (270), and the separator (280) are stacked.

9. The secondary battery (10) as claimed in claim 7, wherein each of the plurality of first electrode plates (260) comprises a first through-hole (262),
each of the plurality of second electrode plates (270) comprises a second through-hole (272),
the separator (280) comprises a plurality of third through-holes (282), and
the first through-hole (262), the second through-hole (272), and the plurality of third through-holes (282) of the separator (280) are aligned with each other when the plurality of first electrode plates (260), the plurality of second electrode plates (270), and the separator (280) are stacked.

10. The secondary battery (10) as claimed in claims 1 to 9, wherein the fixing member (230) comprises a first fixing member (240) and a second fixing member (250), and
the first fixing member (240) and the second fixing member (250) are coupled to secure the electrode assembly (200) in the thickness direction.

11. The secondary battery (10) as claimed in claim 10, wherein the first fixing member (240) comprises a first planar portion (242), and a first protrusion (244) protruding from the first planar portion (242),
the second fixing member (250) comprises a second planar portion (252), and a second protrusion (254) protruding from the second planar portion (252),
the second protrusion (254) comprises an insertion groove, and
the first protrusion (244) is in the insertion groove of the second protrusion (254) to couple the first fixing member (240) with the second fixing member (250).

12. The secondary battery (10) as claimed in claim 11, wherein the first protrusion (244) comprises an embossed anchor,
the insertion groove of the second protrusion (254) comprises a debossed anchor, and
the first protrusion (244) and the second protrusion (254) are coupled to each other in an anchor engagement manner.

13. The secondary battery (10) as claimed in claim 11, wherein the first protrusion (244) comprises screw threads,
the insertion groove of the second protrusion (254) comprises screw grooves, and
the first protrusion (244) and the second protrusion (254) are coupled to each other in a screw coupling manner.

14. The secondary battery (10) as claimed in claims 1 to 13, wherein the electrode assembly (200) comprises a first electrode plate (260), a second electrode plate (270), and a separator (280) located between the first electrode plate (260) and the second electrode plate (270),
each of the first electrode plate (260) and the second electrode plate (270) includes a through-hole, and
the through-hole is formed through the separator (280) during a process of inserting the fixing member (230).

15. The secondary battery (10) as claimed in claims 1 to 14**,** wherein the fixing member (230) comprises an insulating material.
